# EUROPEAN PATENT APPLICATION

(11) **EP 2 682 962 A1**
(43) Date of publication of application: **08.01.2014**
(21) Application number: 11860091.5
(22) Date of filing: 01.03.2011
(51) Int. Cl.: H01G 4/224, H01G 2/04

(54) **CAPACITOR DEVICE**

(71) Applicant: TOYOTA JIDOSHA KABUSHIKI KAISHA, Toyota-shi, Aichi-ken, 471-8571 (JP)
(72) Inventor: ATSUMI, Takashi, Aichi-ken, 471-8571 (JP)
(74) Representative: Kuhnen & Wacker
(86) International application number: PCT/JP2011/054630
(87) International publication number: WO 2012/117522

(57) **Abstract**

The present invention is a capacitor device comprising: one or a plurality of capacitor elements (10); a pair of electrode plates (16a, 16b) disposed and connected substantially in parallel to the capacitor element(s) (10); an insulating layer (18) formed between the pair of electrode plates (16a, 16b); an insulating adhesive layer (28) formed between the capacitor element(s)(10) and the pair of electrode plates (16a, 16b); a case body (12) for housing the capacitor element(s)(10) and the pair of electrode plates (16a, 16b); and a resin molding (14) that is filled into the case body (12) so as to cover peripheries of the capacitor element(s)(10) and the pair of electrode plates (16a, 16b). A capacitor device that can be made smaller and can achieve greater reductions in loss is provided.

## Description

### TECHNICAL FIELD

The present invention relates to a capacitor device including capacitor elements, and more particularly to a capacitor device to be mounted in a vehicle such as a hybrid vehicle.

### BACKGROUND ART

In vehicles and the like, such as hybrid vehicles, in which an internal combustion engine and a motor are used as power sources, a capacitor device is used as a smoothing element that removes an alternating current component from direct current voltage. As a capacitor device including one or a plurality of capacitor elements, a case mold type capacitor is known. A case mold type capacitor has a structure in which one or a plurality of capacitor elements are housed in a case body made of a resin and the like and resin-molded for moisture prevention (see Patent Documents 1 to 3, for example).

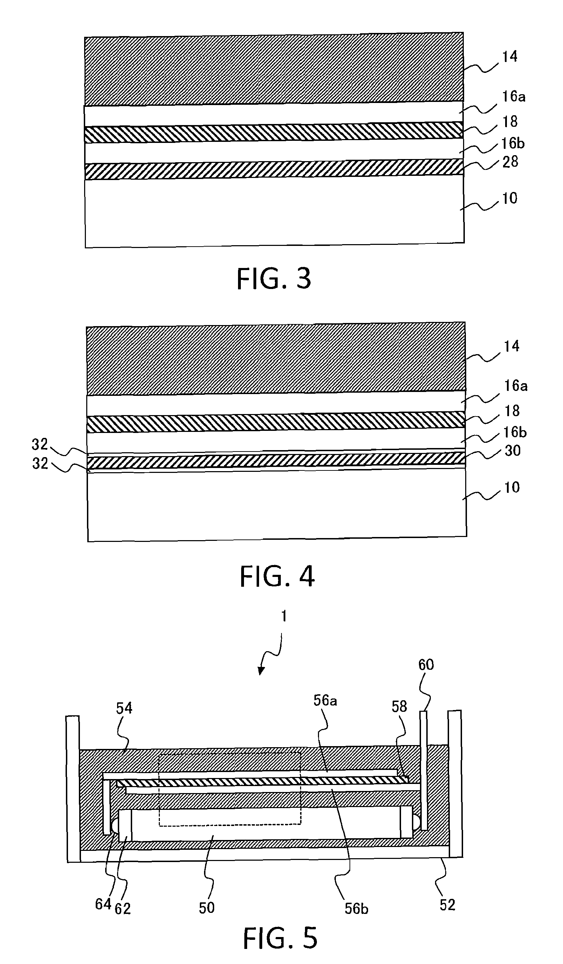

FIG. 5 is a view schematically illustrating an example structure of a conventional case mold type capacitor device. As illustrated in FIG.5, in a state in which one or a plurality of capacitor elements 50 are arranged, a pair of bus bars (electrode plates) 56a and 56b, which are terminals for external connection, are disposed substantially in parallel to the capacitor elements 50. The bus bars (metal plates) 56a and 56b are connected to a pair of metallized contact electrodes 62, respectively, that are formed on the respective ends of the capacitor element 50, via solder portions 64, or the like. An insulating layer 58 is formed between the pair of bus bars 56a and 56b for securing the insulation property. One or a plurality of capacitor elements 50 connected to the pair of bus bars 56a and 56b are housed in a case body 52, and the interior of the case body 52 is filled with a resin to thereby form a resin molding 54, in a state in which a terminal portion 60 for external connection of the bus bars 56a and 56b is exposed from the case body 52.

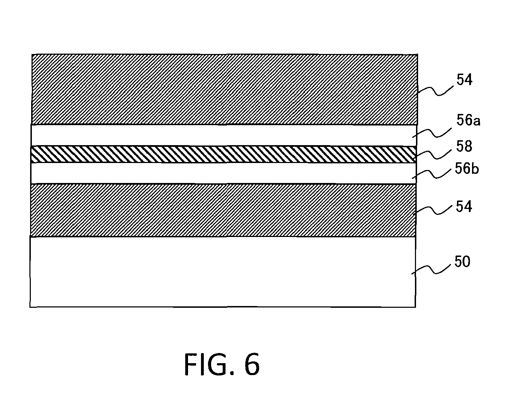

As illustrated in FIG. 6, which is an enlarged view of a portion enclosed by dotted line in FIG. 5, when the bus bars 56a and 56b are wired above the capacitor elements 50 substantially in parallel to the capacitor elements 50, in order to secure the insulation property between the capacitor elements 50 and the bus bar 56b on the capacitor element 50 side, a gap of several millimeters (about 1 mm to 5 mm, for example) is normally provided therebetween, and a resin is introduced into the gap to form resin molding 54.

Particularly, in a vehicle such as a hybrid vehicle, a reduction in size of such a case mold type capacitor or a reduction in loss has been demanded. There has been also a problem that quality deficiency occurs due to insufficient introduction of a resin into the gap between the capacitor elements 50 and the bus bar 56b.

### PRIOR ART DOCUMENT

### PATENT DOCUMENTS

Patent Document: JP 2006-319027 A
Patent Document: JP 2007-299888 A
Patent Document: JP 2007-324311 A

### DISCLOSURE OF THE INVENTION

### TECHNICAL PROBLEMS

The object of the present invention is to provide a capacitor device that can be made smaller and that can achieve greater reductions in loss.

### SOLUTION TO PROBLEMS

In accordance with an aspect of the invention, there is provided a capacitor device including one or a plurality of capacitor elements; a pair of electrode plates which are disposed substantially in parallel to the capacitor elements and connected with the capacitor elements; an insulating adhesive layer which is formed between the capacitor elements and the pair of electrode plates; a case body for housing the capacitor elements and the pair of electrode plates; and a resin molding which fills an interior of the case body so as to cover peripheries of the capacitor elements and the pair of electrode plates.

Further, in the capacitor device, a thickness of the insulating adhesive layer may be within a range between about 0.1 mm and about 0.5 mm.

### ADVANTAGEOUS EFFECTS OF INVENTION

According to the present invention, by providing an insulating adhesive layer between capacitor elements and a pair of electrode plates, a capacitor device that can be made smaller and that can achieve greater reductions in loss can be provided.

### BRIEF DESCRIPTION OF THE DRAWINGS

[FIG. 1] Perspective view schematically illustrating an example structure of a capacitor device according to an embodiment of the present invention.
[FIG. 2] Cross sectional view taken along line A-A in FIG. 1.
[FIG. 3] Enlarged view of a portion enclosed by dotted line in FIG. 2.
[FIG. 4] Cross sectional view illustrating another example structure of a capacitor device according to the embodiment of the present invention.
[FIG. 5] Cross sectional view schematically illustrating an example structure of a conventional capacitor device.
[FIG. 6] Enlarged view of a portion enclosed by dotted line in FIG. 4

### EMBODIMENTS FOR CARRYING OUT THE INVENTION

A preferred embodiment of the present invention will be described. The present embodiment is an example for implementing the present invention, and the present invention is not limited to the present embodiment.

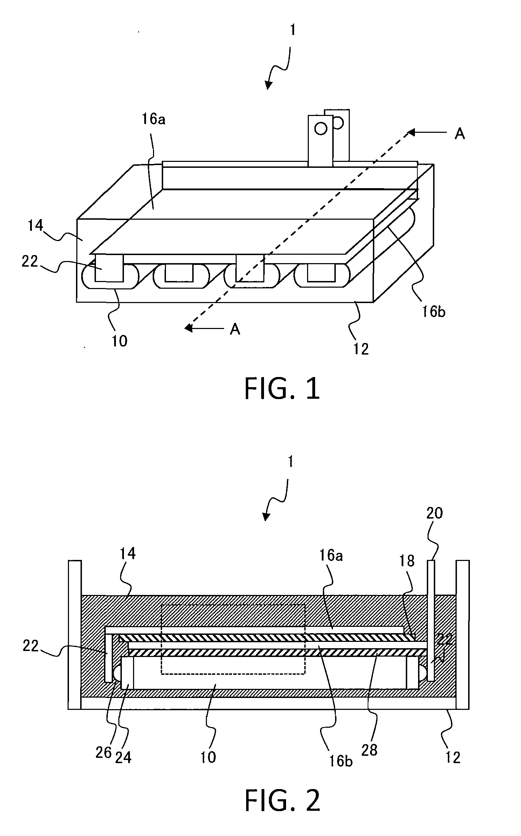

An outline of an example capacitor device according to the embodiment of the present invention is illustrated in FIG. 1, and the structure thereof will be described. FIG. 1 is a perspective view schematically illustrating an example structure of a capacitor device, FIG. 2 is a cross sectional view taken along A-A line in FIG. 1, and FIG. 3 is an enlarged cross sectional view of a portion enclosed by dotted line in FIG. 2. A capacitor device 1 may include one or a plurality of capacitor elements 10, a pair of bus bars (electrode plates) 16a and 16b disposed substantially in parallel to the capacitor elements 10 above the capacitor elements 10, a case body 12 for housing the capacitor elements 10, and a resin molding 14 filling the interior of the case body 12 so as to cover the peripheries of the capacitor elements 10. Here, the arrangement of the plurality of capacitor elements 10 illustrated in FIG. 1 is only one example, and the present invention is not limited to this example.

As illustrated in FIGs. 1 and 2, in a state in which one or a plurality of capacitor elements 10 are arranged, a pair of bus bars (electrode plates) 16a and 16b, which are terminals for external connection, may be disposed substantially in parallel to the capacitor elements 10. Connection portions 22 of the bus bars 16a and 16b may be respectively connected to a pair of metallized contact electrodes 24, that are formed at respective end surfaces of the capacitor element 10, via solder portions 26. With such a connection, the plurality of capacitor elements 10 can be connected in parallel. An insulating layer 18 may formed between the pair of bus bars 16a and 16b so as to secure the insulation property therebetween. One or a plurality of capacitor elements 10 connected to the pair of bus bars 16a and 16b may be housed in a case body 12 including a bottom portion and side portions that stand upright from the peripheral edge of the bottom portion so as to enclose the interior along the peripheral edge of the bottom portion, and the interior of the case body 12 may be filled with a resin so as to cover the capacitor elements 10 and the bus bars 16a and 16b to thereby form resin molding 14, in a state in which a terminal portion 20 for external connection of the bus bars 16a and 16b is exposed out of the case body 12.

As illustrated in FIG. 3, which is an enlarged view of a portion enclosed by dotted line in FIG. 2, when the pair of bus bars 16a and 16b are wired above the capacitor element 10, an insulating adhesive layer 28 may be formed, which secures the insulation property between the capacitor element 10 and the bus bar on the capacitor element 10 side (i.e. the bus bar 16b in the example illustrated in FIGs. 1 to 3) and bonds the capacitor element 10 to the pair of bus bars 16a and 16b.

In the capacitor device 1, by providing the insulating adhesive layer 28 between the capacitor element 10 and the pair of bus bars 16a and 16b, when compared to the conventional capacitor device as illustrated in FIGs. 5 and 6, the gap between the capacitor element 10 and the pair of bus bars 16a and 16b disposed substantially in parallel to the capacitor element 10 can be reduced so that a further reduction in size of the capacitor device can be achieved. Further, the distance between the capacitor element 10 and the pair of bus bars 16a and 16b can be reduced and a cancellation effect can be caused between the electric current flowing in the capacitor element 10 and the electric current flowing in the bus bar on the capacitor element 10 side (i.e. the bus bar 16b in the example illustrated in FIGs. 1 to 3), so that parasitic inductance can be reduced and the loss can be further reduced. In addition, occurrence of quality deficiency caused by insufficient introduction of a resin between the capacitor element 10 and the pair of bus bars 16a and 16b can be suppressed.

The insulating adhesive layer 28 may be any layer as long as it has an insulation property and can bond the capacitor element 10 and the bus bars, and is not particularly limited. As a material forming the insulating adhesive layer 28, a resin having an insulation property and an adhesion property such as an epoxy resin, polyester, polyethylenenaphthalate, and the like, can be listed.

While the insulating adhesive layer 28 may have a single-layer structure formed of the above-described epoxy resin and the like, it may have a multi-layer structure formed of an insulating layer 30 and adhesive layers 32 disposed on both sides of the insulating layer 30, as illustrated in FIG. 4.

The insulating layer 30 may be any layer as long as it has an insulation property, and is not particularly limited. As a material forming the insulating layer 30, a resin and the like having an insulation property such as a PET (polyethylene terephthalate) resin, a nylon resin, a polyimide resin, polyethylenenaphthalate, polypropylene, and the like, can be listed, and a resin having a heat resistance is preferable.

The adhesive layer 32 may be any layer as long as it can bond the capacitor element 10 and the bus bars, and is not particularly limited. As a material forming the adhesive layer 32, an adhesive such as a silicone resin, an acrylic resin, rubber, and the like, can be listed.

The thickness of the insulating adhesive layer 28 (the total thickness, when the insulating adhesive layer 28 is formed of the insulating layer 30 and the adhesive layer 32) is preferably within the range between about 0.1 mm and about 0.5 mm. If the thickness of the insulating adhesive layer 28 is less than about 0.1 mm, the insulation property may be insufficient, and if the thickness is over about 0.5 mm, there is a case in which a reduction effect of the parasitic inductance cannot be fully achieved.

The bus bars 16a and 16b may be electrode plates having a substantially flat strip shape, that may be formed of an electrical conductor such as a metal including copper, aluminum, a copper alloy, an aluminum alloy, and the like. The bus bars 16a and 16b may include flat strip portions which are disposed substantially in parallel to the capacitor elements 10, terminal portions 20 for external connection, which are connected to the end portions of the flat strip and stand upright with respect to the flat strip portion, and connection portions 22 to be connected to the capacitor element 10, that stand upright with respect to the flat strip portion.

While the example illustrated in FIGs. 1 to 3 has a structure in which one of the bus bars 16a and 16b (i.e., the bus bar 16b) is opposed to the capacitor elements 10 via the insulating adhesive layer 28, the structure of the pair of bus bars 16a and 16b is not limited to this example. For example, a structure in which each of the pair of bus bars 16a and 16b is opposed to the capacitor element 10 via the insulating adhesive layer 28 may also be adopted.

The insulating layer 18 may be formed of an insulator, and may be , for example, an insulating sheet of a PET (polyethylene terephthalate) resin, a nylon resin, a polyimide resin, polyethylenenaphthalate, polypropylene, and the like. The thickness of the insulating layer 18 may be within the range between about 0.1 mm and about 0.5 mm, for example.

As the capacitor element 10, a film capacitor, a multilayer capacitor, and the like, which is produced by wrapping a pair of metalized films, each having a metal deposition electrode formed on a dielectric film, such that the metal deposition electrodes are opposite each other via the dielectric films, may be used, for example.

The case body 12 may be formed of a resin and the like, such as PPS (poly(phenylene sulfide)), PBT (polybutylene terephthalate) PC (polycarbonate), EP (epoxy), nylon, and the like.

The shape of the case body 12 may be a substantially rectangular shape, for example, but is not particularly limited.

The case body 12 may be further housed in a capacitor case made of a metal and the like. The capacitor case may be formed of an aluminum die cast, for example. The capacitor case may also be formed of a metal such as iron, magnesium, and the like, in addition to aluminum.

The resin molding 14 may play a role of preventing moisture absorption and the like by the capacitor element 10. A resin forming the resin molding 14 may be an epoxy resin, a urethane resin, a silicone resin, and the like, of which an epoxy resin is desirable in terms of excellent moisture-proof property and insulation property.

The metallized contact electrode 24 may be formed by metal thermal spray of a Zn/Sn metal, for example.

The solder portion 26 may be formed by soldering of Sn-Pb or SnAgCu eutectic solder, for example.

The capacitor device according to the present embodiment can be manufactured by the following method, for example. For example, an insulating sheet may be disposed between the bus bars 16a and 16b for forming the insulating layer 18. One or a plurality of capacitor elements 10 each including the metallized contact electrodes 24 at both ends and the pair of bus bars 16a and 16b having the insulating layer 18 may be bonded together by pressurization, heating, and so on, and the insulating adhesive layer 28 may be formed. The connection portions 22 of the bus bars 16a and 16b and the metallized contact electrodes 24 may be connected by soldering. An element formed of the one or a plurality of capacitor elements 10 and the pair of bus bars 16a and 16b that are integrated with each other may be housed within the case body 12 in a state in which the terminal portions 20 for external connection of the bus bars 16a and 16b are exposed out of the case body 12, and the interior of the case body 12 may be filled with a resin so as to cover the capacitor elements 10 and the bus bars 16a and 16b, thereby forming the resin molding 14.

Further, the capacitor device according to the present embodiment can also be manufactured by the following method, for example. For example, an insulating sheet may be disposed between the bus bars 16a and 16b for forming the insulating layer 18. The metallized contact electrodes 24 formed at both ends of each of one or a plurality of capacitor elements 10 and the connection portions 22 of the bus bars 16a and 16b may be bonded by soldering. The capacitor elements 10 and the pair of bus bars 16a and 16b may be bonded together by pressurization, heating, and so on, and the insulating adhesive layer 28 may be formed. An element formed of one or a plurality of capacitor elements 10 and the pair of bus bars 16a and 16b that are integrated with each other may be housed within the case body 12 in a state in which the terminal portions 20 for external connection of the bus bars 16a and 16b are exposed out of the case body 12, and the interior of the case body 12 may be filled with a resin so as to cover the capacitor elements 10 and the bus bars 16a and 16b, thereby forming the resin molding 14. The method for manufacturing the capacitor device according to the present embodiment is not particularly limited and is not limited to the above example methods.

The capacitor device according to the present embodiment may be mounted on a vehicle, such as a hybrid vehicle in which an internal combustion engine and a motor are used as power sources, an electric vehicle, and a fuel cell vehicle, for example. While the capacitor device according to the present embodiment may be disposed in a front portion, a rear portion, or elsewhere of a vehicle or the like, the location where the capacitor device is disposed is not particularly limited.

### REFERENCE SYMBOLS

1 capacitor device, 10, 50 capacitor element, 12, 52 case body, 14, 54 resin molding, 16a, 16b, 56a, 56b bus bar (electrode plate), 18, 58 insulating layer, 20, 60 terminal portion, 22 connection portion, 24, 62 metallized contact electrode, 26, 64 solder portion, 28 insulating adhesive layer, 30 insulating layer, 32 adhesive layer.

## Claims

1. A capacitor device comprising:
one or a plurality of capacitor elements;
a pair of electrode plates which are disposed substantially in parallel to the capacitor elements and connected with the capacitor elements;
an insulating adhesive layer which is formed between the capacitor elements and the pair of electrode plates;
a case body for housing the capacitor elements and the pair of electrode plates; and
a resin molding which fills an interior of the case body so as to cover peripheries of the capacitor elements and the pair of electrode plates.

2. The capacitor device according to Claim 1, wherein
a thickness of the insulating adhesive layer is within a range between about 0.1 mm and about 0.5 mm.
